**Europäisches Patentamt**

**European Patent Office**

**Office européen des brevets**

(11) Veröffentlichungsnummer: **0 172 403**
**B1**

(12) **EUROPÄISCHE PATENTSCHRIFT**

(45) Veröffentlichungstag der Patentschrift:
**09.03.88**

(21) Anmeldenummer: **85108837.7**

(22) Anmeldetag: **15.07.85**

(51) Int. Cl.⁴: **F 28 C 1/16,** F 28 F 25/00,
B 03 C 3/16, B 03 C 3/53,
C 02 F 1/16

(54) **Verdunstungskühlturm.**

(30) Priorität: **26.07.84 DE 3427664**

(43) Veröffentlichungstag der Anmeldung:
**26.02.86 Patentblatt 86/9**

(45) Bekanntmachung des Hinweises auf die Patenterteilung:
**09.03.88 Patentblatt 88/10**

(84) Benannte Vertragsstaaten:
**DE FR GB**

(56) Entgegenhaltungen:
**EP - A - 0 076 627**
**DE - A - 1 943 067**
**DE - A - 2 602 485**
**FR - A - 730 332**
**FR - A - 1 458 957**
**FR - A - 2 309 816**
**GB - A - 2 005 158**
**US - A - 3 252 501**
**US - A - 4 031 173**

(73) Patentinhaber: **Siemens Aktiengesellschaft Berlin und München, Wittelsbacherplatz 2, D-8000 München 2 (DE)**

(72) Erfinder: **Meyer-Pittroff, Roland, Prof. Dr. Dipl.-Ing., Am Haidbuckel 30, D-8501 Eckental (DE)**

**Beschreibung**

Die Erfindung bezieht sich auf einen Verdunstungskühlturm mit am unteren Turmumfang vorgesehenen Ansaugöffnungen für Umgebungsluft, mit einem von der angesaugten Luft durchströmten Kühlwasserberieselungssystem, von dem Kühlwasser in ein am Boden des Kühlturms angeordnetes Auffangbecken regnet, und mit Mitteln zur Zumischung kühler Umgebungsluft zum aufsteigenden Strom der warmfeuchten Abluft im oberen Bereich des Kühlturms sowie mit einem diesen Gemischstrom in Richtung auf das obere offene Ende des Kühlturms durchlassenden Ausströmquerschnitt eines Turmbereiches.

Ein solcher Verdunstungskühlturm ist bekannt durch die DE-A-1 943 067. Generell lässt sich sagen, dass die darin dargestellten wie auch andere bekannte Verdunstungskühltürme entweder mit verhältnismässig grossen Abmessungen als Naturzugkühltürme oder mit kleineren Abmessungen als zwangsbelüftete Kühltürme gebaut werden. Die angesaugte Umgebungsluft tritt bei solchen Verdunstungskühltürmen am unteren Kühlturmrand ein, durchströmt ein Kühlwasserberieselungssystem, in dem das zu kühlende Wasser herabregnet und verlässt aufgewärmt und mit Feuchtigkeit beladen den Kühlturm durch dessen obere zentrale Öffnung. Das Wasser kühlt sich dabei durch Wärmeabgabe an die Luft, vor allem aber durch Verdunstung ab. Beim Naturzugkühlturm wird der Auftrieb der im Vergleich zur Umgebungsluft wärmeren Abluft ausgenutzt, um neue Umgebungsluft anzusaugen, während beim zwangsbelüfteten Kühlturm ein Ventilator für den Luftdurchzug sorgt. Letzterer kann aus diesem Grund auch mit einer geringeren Höhe gebaut werden. In beiden Fällen vermischt sich die warmfeuchte Abluft oberhalb des Kühlturms mit der kälteren Umgebungsluft. Dabei wird die Taupunktlinie überschritten, und es bilden sich kleine Nässetröpfchen, durch die der Kühlturm weithin sichtbar wird. Durch den bekannten Verdunstungskühlturm nach der zitierten DE-A-1 943 067 ist nun bereits die allgemeine Aufgabe gelöst, zwecks Vermeidung schädlicher Feuchtigkeitsniederschläge in der Umgebung des Kühlturms die Schwadenbildung zu vermindern, und dies bei möglichst geringem Energieaufwand. Hierzu wird dem aufsteigenden Strom der warm-feuchten Abluft in einem oberen Bereich des Kühlturms radial-horizontal oder radial-abwärts einströmende Aussenluft zugemischt, wobei eine jahreszeitlich abhängige Betriebsweise gefahren wird, z.B. Mischluftbetrieb ohne Taupunktunterschreitung (Frühjahr und Herbst), Mischluftbetrieb mit Taupunktunterschreitung (Winter), Betrieb mit Kältespeicherung ohne oder mit Eisbildung (insbesondere Winter), Betrieb mit Wärmeaustauschsystemen mit Trennwand oder Betrieb mit Speichermedien im Abluft- und Zuluftbetrieb mit nur einer Luftrichtung (gesamte Jahreszeit ausser Hochsommer). Diese Vielzahl von Betriebszuständen kompliziert das Verfahren, und die für den bekannten Verdunstungskühlturm sich stellende Teilaufgabe, keine zusätzliche Heizenergie zur Luftvorwärmung und kein kaltes Wasser zur Luftabkühlung benötigen zu müssen, ist nicht gelöst, weil im Abluftbereich vor der Tröpfchen-Abscheidevorrichtung bei den meisten Ausführungsbeispielen eine Sprühwasser-Einrichtung installiert ist.

Ausgehend von einem Verdunstungskühlturm gemäss Oberbegriff des Patentanspruchs 1, liegt der Erfindung die Aufgabe zugrunde, die Kühlturmschwadenbildung bei geringstmöglichem Energieverbrauch zu verhindern oder zumindest auf einen unschädlichen Umfang zu vermindern. Zur Lösung dieser allgemeinen Aufgabe soll aber vom Prinzip der elektrostatischen Tröpfchenabscheidung Gebrauch gemacht werden, wie es an sich durch einen nicht gattungsgemässen Kühlturm nach der FR-A-730 332 bekanntgeworden ist.

Die der Erfindung zugrundeliegende Aufgabe besteht mithin präzisiert darin, bei einem gattungsgemässen Verdunstungskühlturm eine besonders günstige Ausbildung und Anordnung der elektrostatischen Entladungsstrecken und deren Korrelation zu einem die Umgebungsluft in den Kühlturm fördernden Kaltluftverteilungssystem zu schaffen, so dass der durch die Einbauten der elektrostatischen Entladungsstrecken beeinflusste Durchströmungswiderstand des Kühlturms nicht oder nicht merkbar vergrössert ist.

Erfindungsgemäss wird die gestellte Aufgabe bei einem gattungsgemässen Verdunstungskühlturm durch die im Kennzeichen des Patentanspruchs 1 aufgeführten Merkmale gelöst. Vorteilhafte Weiterbildungen sind in den Patentansprüchen 2 bis 9 angegeben.

Die mit der Erfindung erzielbaren Vorteile sind vor allem in folgendem zu sehen: Die elektrostatische Abscheidung der in der Abluft des Verdunstungskühlturms enthaltenen feinen Tröpfchen erlaubt es, verhältnismässig grosse Flüssigkeitsmengen mit geringem Energieaufwand und bei vernachlässigbarer Erhöhung des Strömungswiderstandes im Kühlturm abzuscheiden. Durch das Auffangen der so abgeschiedenen Wassermengen mittels der den Auffangelektroden zugeordneten Sammeleinrichtungen wird zugleich der extern zu deckende Kühlwasserbedarf des Kraftwerks deutlich verringert und auch die Voraussetzung geschaffen, aus salzhaltigem Wasser Trink- oder Speisewasser zu gewinnen, wenn dieses salzhaltige Wasser im Kühlwasserberieselungssystem versprüht wird, wie es im Patentanspruch 9 näher umschrieben wird.

Durch die Zumischung von Umgebungsluft zu der den elektrostatischen Entladungsstrecken zuströmenden feucht-warmen Luft, und zwar mittels der der Umgebungsluft aufwärts gerichtete Strömungskomponenten aufdrückenden Kühlluftverteilungssysteme, werden der Anteil des elektrostatisch abzuscheidenden Wassers beträchtlich erhöht, die Tröpfchenbildung in der feucht-warmen Luft innerhalb des Verdunstungskühlturms infolge deutlicher Unterschreitung der Taupunktlinie verstärkt und die Ausscheidungsrate in den Entladungsstrecken vergrössert. Durch die Gegenstände der Patentansprüche 5 oder 6 kann man die relative Feuchtigkeit der Abluft durch mässige Aufwärmung derselben so weit absenken, dass sich Kühlturmschwaden bei den üblichen nicht-äquatorialen klimatischen Gegebenheiten mit Sicherheit vermeiden lassen, wobei Patentanspruch 5 die direkte nachträgliche Aufwärmung der Abluft betrifft und der Patentanspruch 6 die nachträgliche indirekte Aufwärmung mittels Zumischung vorgewärmter Umgebungsluft.

Die elektrostatischen Entladungsstrecken in modularer Bauweise nach Patentanspruch 2 haben im Vergleich zu einer einzigen grossen elektrostatischen Abscheideeinrichtung mit einer zentral im Kühlturm angeordneten drahtförmigen Elektrode nach der FR-A-730 332 den Vorteil der leichteren Herstellbarkeit und Montage sowie des geringeren Raumbedarfs in kühlturm-axialer Richtung. Die Patentansprüche 3 und 4 betreffen vorteilhafte räumliche Zuordnungen der elektrostatischen Entladungsstrecken zu den Kaltluftverteilungssystemen bzw. zu den Sammeleinrichtungen für das abgeschiedene Wasser.

Weitere Einzelheiten der Erfindung werden anhand der in den Figuren dargestellten Ausführungsbeispiele erläutert. Es zeigen:

Fig. 1 einen Schnitt durch einen erfindungsgemässen Naturzughybridkühlturm mit Einrichtungen zur Unterdrückung der Schwadenbildung,

Fig. 2 einen Schnitt längs der Linie II/II der Fig. 1,

Fig. 3 eine vergrösserte Darstellung der den Auffangelektroden zugeordneten Sammeleinrichtungen für das Wasser und

Fig. 4 einen erfindungsgemässen zwangsbelüfteten Hybridkühlturm mit Einrichtungen zur Unterdrückung der Schwadenbildung.

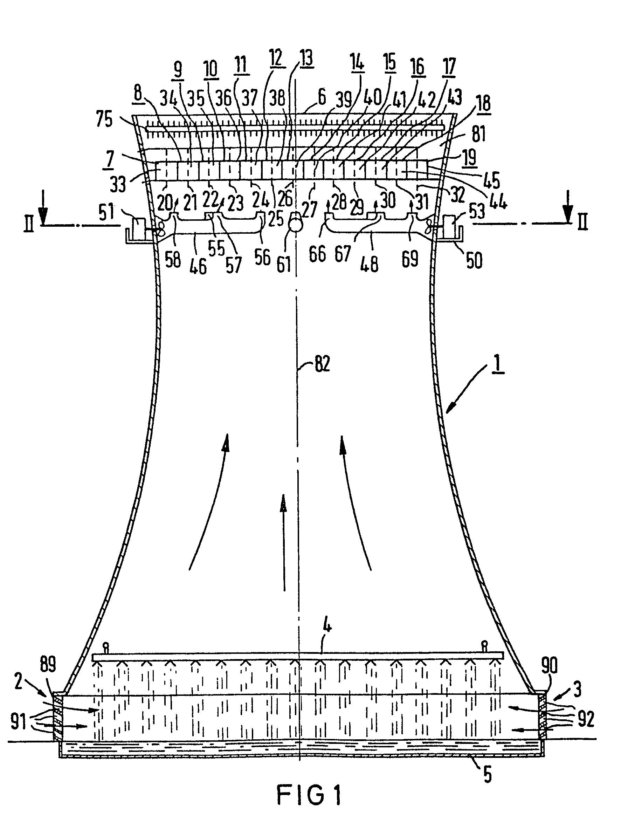

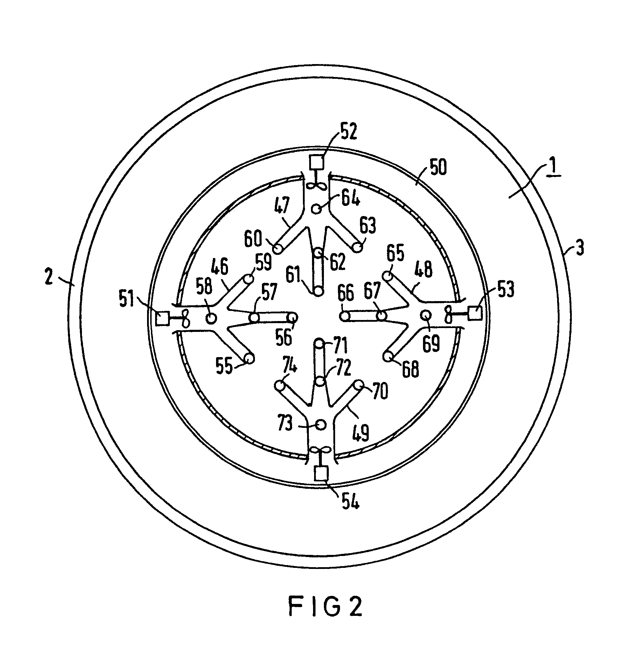

Die Schnittdarstellung der Fig. 1 lässt den Aufbau eines Naturzugkühlturms 1 gut erkennen. Die Ansaugöffnungen 2, 3 für die Umgebungsluft befinden sich am unteren Turmumfang. Im unteren Bereich des Kühlturms 1 befindet sich das Kühlwasserberieselungssystem 4 von dem Kühlwasser in das am Boden des Kühlturms 1 angeordnete Auffangbecken 5 regnet. Der Kühlturm ist an seinem oberen Ende 6 offen. Im oberen Turmbereich sind erfindungsgemäss offene, wabenförmige, elektrostatische Entladungsstrecken 7 bis 19 angeordnet. Deren drahtförmige Sprühelektroden 20 bis 32 hängen durch sie umgebende oben und unten offene rechteckige oder vieleckige Auffangelektroden 33 bis 45 hindurch. Unterhalb der Entladungsstrecken sind vier Kaltluftverteilungssysteme 46 bis 49 zu erkennen, die radial von der Aussenwand des Naturzugkühlturms 1 ins Innere hineinragen. Jedes dieser Kaltluftverteilungssysteme 46 bis 49 wird über einen separaten auf einem aussen am Naturzugkühlturm 1 umlaufenden Balkon 50 aufgestellten Luftverdichter 51 bis 54 mit Umgebungsluft gespeist. Diese wird, wie die Schnittdarstellung der Fig. 2 verdeutlicht, von den Kaltluftverteilungssystemen 46 bis 49 gleichmässig über den Querschnitt des Kühlturms verteilt. Dabei strömt die kühle Umgebungsluft aus nach oben gerichteten Ausblasdüsen 55 bis 74 des Kaltluftverteilungssystems aus. Oberhalb der elektrostatischen Entladungsstrecken 7 bis 19 erkennt man in der Fig. 1 ein Wärmetauscherrohrsystem 75, an dem die den Kühlturm 1 verlassende Abluft vorbeistreicht. Das Wärmetauscherrohrsystem wird von dem Kühlturm zufliessendem warmen Kühlwasser durchströmt.

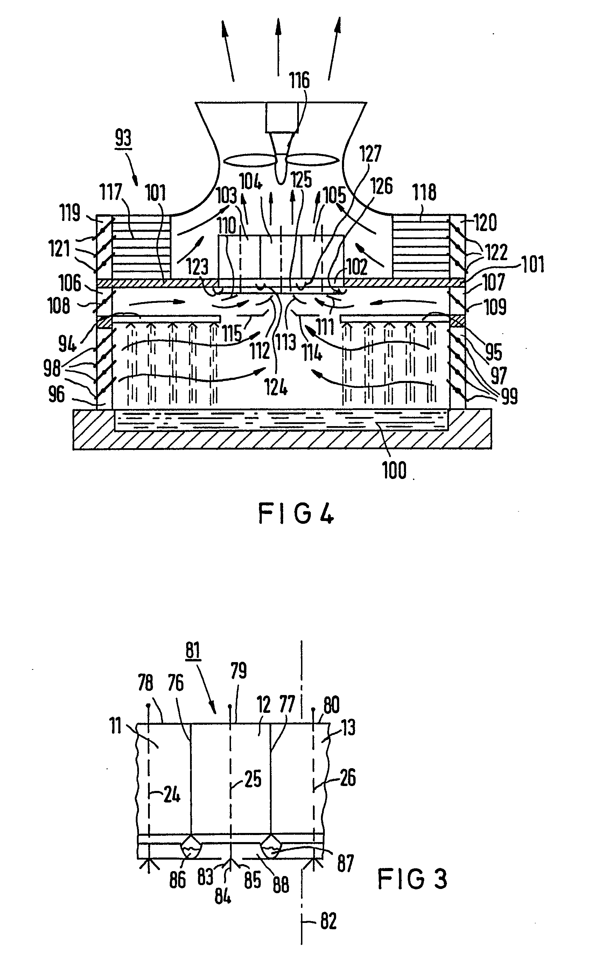

Die Fig. 3 zeigt in vergrösserter Schnittdarstellung die Konstruktion der elektrostatischen Entladungsstrecken 7 bis 19. Sie bestehen aus hochkant stehenden Blechen 76 bis 80, die untereinander zu einem oben und unten offenen wabenartigen Zwischenboden 81 verbunden sind. Durch jeden der so gebildeten, parallel zur Kühlturmachse 82 ausgerichteten Schächte hängt eine Sprühelektrode 20 bis 32. Diese besitzen an ihrem unteren Ende je mehrere Sprühspitzen 83 bis 85. Die Sprühelektroden sind gegenüber den Auffangelektroden 33 bis 45 negativ geladen. Unter den unteren Rändern der Auffangelektroden sind untereinander komunizierende Auffangrinnen 86 bis 88 für die von den Auffangelektroden abtropfende, abgeschiedene Wassertropfen angeordnet. Diese Auffangrinnen 86 bis 88 sind an ein hier nicht näher beschriebenes Trink- bzw. Speisewasserversorgungssystem angeschlosse. Den Ansaugöffnungen 2, 3 für die Umgebungsluft am unteren Kühlturmrand sind Rahmen 89 bis 90 mit verstellbaren Regelklappen 91, 92 vorgesetzt, mit denen der Einströmquerschnitt verändert werden kann.

Während des Betriebs des Naturzugverdunstungskühlturms 1 steigt die feucht-warme Luft im Kühlturm infolge ihrer geringeren Dichte nach oben und erzeugt so am Boden des Kühlturms den für die Ansaugung der Umgebungsluft notwendigen Unterdruck. Die Umgebungsluft tritt über die Ansaugöffnungen 2, 3 am unteren Umfang des Kühlturms ein. Sie nimmt beim Durchströmen des von warmem Kühlwasser gespeisten Kühlwasserberieselungssystems 4 Feuchtigkeit und Wärme auf. Dabei kühlt sich das Kühlwasser durch Abgabe fühlbarer und latenter Wärme an die Umgebungsluft ab und rieselt abgekühlt in das im Boden 4 des Kühlturms 1 angeordnete Auffangbecken 5. Von dort wird das Kühlwasser in den Kühlkreislauf zurückgepumpt.

Im Bereich des Kaltluftverteilungssystems 46 bis 49 wird die aufsteigende, feucht-warme Luft mit der kühleren Umgebungsluft vermischt und abgekühlt. Dabei kondensiert ein Teil der Feuchtigkeit bei Erreichen einer relativen Luftfeuchte von 100% verstärkt als feine Nebeltröpfchen aus. Diese Tröpfchen werden beim Vorbeistreichen an den Sprühelektroden 20 bis 32 der Entladungsstrecken 7 bis 19 negativ aufgeladen, so dass sie beim Durchströmen der wabenförmigen Auffangelektroden 33 bis 45 von diesen elektrostatisch angezogen werden. Die sich an den senkrechten Blechtafeln 76 bis 80 der Auffangelektroden niederschlagenden Nässetröpfchen rieseln an diesen Blechtafeln herab und tropfen von deren unteren Rand in die Auffangrinnen 86 bis 88. Von diesen Auffangrinnen kann das Wasser in ein hier nicht weiter dargestelltes Trink- und/oder Speisewasserversorgungssystem weitergeleitet werden. Die die Entladungsstrecken 7 bis 19 verlassende, von ihren feinen Tröpfchen befreite Abluft streicht oberhalb der elektrostatischen Entladungsstrecken 7 bis 19 durch das vom Kühlwasser beaufschlagte Wärmetauscherrohrsystem 75 und nimmt dort Wärme auf. Dadurch sinkt ihre relative Feuchte, so dass die Abluft beim Verlassen des Kühlturms 1 untersättigt und unsichtbar ist.

Bei diesem Naturzugverdunstungskühlturm 1 wird die Tröpfchenbildung in der aufsteigenden feucht-warmen Abluft, die auch ohne Kühllufteinleitung während des Aufstiegs schon im Kühlturm einsetzen kann, durch die Kühllufteinleitung wesentlich verstärkt. Auf diese Weise lassen sich weit grössere Wassermengen in den Entladungsstrecken 7 bis 19 abscheiden. Durch Anpassung der den Wärmetauscherrohrsystemen 75 zuströmenden Kühlwassermenge und der in das Kaltluftverteilungssystem einzuspeisenden Menge an Umgebungsluft sowie durch Änderung des Ansaugquerschnitts am unteren Umfang des erfindungsgemässen Naturzughybridkühlturms 1 durch Verstellung der dort angeordneten Regelklappen 91, 92, lässt sich die Restfeuchte der den Kühlturm verlassenden Abluft in weiten Grenzen variieren und den jeweiligen klimatischen Gegebenheiten so anpassen, dass sichtbare Kühlturmschwaden mit Sicherheit vermieden werden. Der durch das Einblasen von kühler Umgebungsluft verminderte Auftrieb wird durch die Ausrichtung der Ausblasdüsen 55 bis 74 des Kaltluftverteilungssystems 46 bis 49 nach oben weitgehend kompensiert.

Dadurch, dass über die Entladungsstrecken 7 bis 19 erhebliche Mengen an Kühlflüssigkeit zurückgewonnen werden können, lässt sich der Kühlwasserverbrauch absenken. Gibt das Kühlwasser seine Wärme darüber hinaus in einem vorgeschalteten weiteren Wärmetauscher (nicht dargestellt) an salzhaltiges Wasser, z.B. Meerwasser ab und wird das so aufgewärmte salzhaltige Wasser dem Kühlwasserberieselungssystem 4 zugeleitet, so kann aus diesem salzhaltigen Wasser an den Auffangrinnen der Entladungsstrecken Trink- oder auch Speisewasser gewonnen werden.

Die Fig. 4 zeigt einen Schnitt durch einen zwangsbelüfteten Hybridkühlturm 93. Dieser Hybridkühlturm hat im Ausführungsbeispiel einen rechteckigen Grundriss. Er könnte aber genausogut mit einem zylindrischen Grundriss ausgeführt werden. Im unteren Wandbereich dieses zwangsbelüfteten Hybridkühlturm sind auf zwei einander gegenüberliegenden Seiten zwei ähnlich wie beim Naturzugverdunstungskühlturm 1 aufgebaute Kühlwasserberieselungssysteme 94, 95 angeordnet. Unterhalb dieser Kühlwasserberieselungssysteme sind in der Aussenwand des zwangsbelüfteten Kühlturms 93 Luftansaugöffnungen 96, 97 eingelassen. Deren Querschnitt ist durch eingebaute Luftzufuhrregelklappen 89, 99 veränderbar. Im Boden des zwangsbelüfteten Hybridkühlturms 93 ist ein Wasserauffangbecken 100 angeordnet. Oberhalb der Kühlwasserberieselungssysteme 94, 95 ist ein Zwischenboden 101 mit einer zentralen Öffnung 102 für die den Kühlturm durchströmende Luft eingebaut. Über der zentralen Öffnung 102 im Zwischenboden 101 des zwangsbelüfteten Hybridkühlturms ist ein wabenförmiges, oben und unten offenes System von elektrostatischen Entladungsstrecken 103, 104, 105 montiert, welches im Prinzip den in den Fig. 1 und 3 gezeigten Entladungsstrecken 7 bis 19 entspricht. Diese Entladungsstrecken überdecken den gesamten Querschnitt der zentralen Öffnung 102 im Zwischenboden 101.

Unmittelbar unterhalb des Zwischenbodens 101 und oberhalb der Kühlwasserberieselungssysteme 94, 95 sind an der Aussenwand des zwangsbelüfteten Kühlturms 93 Ansaugöffnungen 106, 107 für Umgebungsluft angeordnet. Der Querschnitt dieser Ansaugöffnungen ist über Frischluftregelklappen 108, 109 an die jeweiligen Betriebsverhältnisse anpassbar. Ausserdem sind im Wege dieser zumischbaren Umgebungsluft unterhalb der zentralen Öffnung 102 im Zwischenboden 101 eine Reihe von Leitblechen 110 bis 115 zu einem Kaltluftverteilungssystem verbunden, das die seitlich zuströmende Umgebungsluft gleichmässig mit der aufsteigenden feucht-warmen Abluft vermischt. Oberhalb der Entladungsstrecken 103 bis 105 ist im Ausführungsbeispiel der Fig. 4 ein Ventilator 116 für die Zwangsbelüftung des Kühlturms angeordnet. Neben den elektrostatischen Entladungsstrecken 103 bis 105 erkennt man oberhalb des Zwischenbodens 101 an der Aussenwand des zwangsbelüfteten Hybridkühlturms 93 Wärmetauscherheizflächen 117, 118. Im Bereich dieser Wärmetauscherheizflächen sind an der Aussenwand des zwangsbelüfteten Kühlturms Luftansaugöffnungen 119, 120 angebracht, die mit Regelklappen 121, 122 in ihrem Querschnitt veränderbar sind. Auch bei diesem Kühlturm erkennt man unterhalb der senkrechten Bleche der Entladungsstrecken 103, 104, 106, den Auffangelektroden, Auffangrinnen 123 bis 127 für das abgeschiedene Wasser. Diese Auffangrinnen sind wiederum an einem hier nicht dargestellten Speisewasser- oder Trinkwassersystem angeschlossen.

Beim Betrieb dieses zwangsbelüfteten Hybridkühlturms 93 wird über den Ventilator 116 Umgebungsluft durch die Luftzufuhrregelklappen 98, 99 und die beiden Kühlwasserberieselungssysteme 94, 95 angesaugt und durch den Durchbruch 102 im Zwischenboden 101 und die elektrostatischen Entladungsstrecken 103 bis 105 hindurch nach oben gefördert. Die Menge dieser angesaugten Luft lässt sich durch die dem Kühlwasserberieselungssystem vorgeschalteten Luftzufuhrregelklappen 98, 99 den jeweiligen Betriebsverhältnissen anpassen. Zugleich lässt sich durch die Frischluftregelkappen 108, 109 oberhalb der beiden Kühlwasserberieselungssysteme 94, 95 und unterhalb des Zwischenbodens 101 Umgebungsluft der den Entladungsstrecken 103 bis 105 zuströmenden feucht-warmen Abluft zumischen. Hierdurch wird die Auskondensierung feinster Wassertröpfchen im Bereich der Entladungsstrecken gefördert und die Menge des in diesen Entladungsstrecken abgeschiedenen Wassers vergrössert. Die die elektrostatischen Entladungsstrecken verlassende Abluft ist zwar frei von Wassertropfen, besitzt aber noch immer eine relative Feuchte von ca. 100%. Mittels der auf dem Zwischenboden 101 längs zwei einander gegenüberliegender Aussenwände angeordneten Wärmetauscherheizflächen 117, 118 kann dieser die Entladungsstrecken 106, 107 verlassenden feucht-warmen Abluft an diesen Wärmetauscherheizflächen aufgewärmte Umgebungsluft beigemischt werden. Dadurch lassen sich deren relative Feuchte soweit vermindern, dass sich oberhalb des erfindungsgemässen zwangsbelüfteten Hybridkühlturms beim Vermischen der den Kühlturm verlassenden Abluft mit der Umgebungsluft keine sichtbaren Schwaden bilden.

Zur Vermeidung von Kühlturmschwaden muss die Aufheizung der die Entladungsstrecken verlassenden feucht-warmen Abluft um so stärker erfolgen, je niedriger die Aussentemperatur und je höher die relative Feuchte der Aussenluft ist. Dadurch, dass ein Grossteil der Feuchtigkeit der Abluft bereits in den Entladungsstrecken abgegeben worden ist, braucht weniger Umgebungsluft durch die Wärmetauscher aufgewärmt und der Abluft beigemischt zu werden. Dadurch können diese Wärmetauscher 117, 118 bedeutend kleiner gehalten werden, was wiederum die Kosten eines solchen zwangsbelüfteten Kühlturms vermindert. In den unterhalb der Auffangelektroden angeordneten Auffangrinnen 123 bis 127 kann ein Teil des in den Kühlwasserberieselungssystemen 94, 95 verdunsteten Kühlwassers zurückgewonnen werden und bei der Beschickung mit salzhaltigem Kühlwasser Trink- oder Speisewasser gewonnen werden.

Die anhand der Fig. 4 gezeigte Aufwärmung der den Kühlturm verlassenden Abluft über an Wärmetauschern 117, 118 aufgewärmte Umgebungsluft kann ebenso bei einem Naturzugkühlturm angewendet werden wie sich die anhand des Naturzugkühlturms in der Fig. 1 gezeigte direkte Aufwärmung der feucht-warmen Abluft über Wärmetauscherrohrsysteme 75 bei zwangsbelüfteten Kühltürmen anwenden lässt.

*Bezugszeichenliste*

| | |
|---|---|
| Verdunstungskühlturm | 1 |
| Ansaugöffnung | 2, 3 |
| Kühlwasserberieselungssystem | 4 |
| Auffangwanne (becken) | 5 |
| Oberes Ende (des Kühlturms | 6 |
| Entladungsstrecke | 7 bis 9 |
| Spülelektrode | 20 bis 32 |
| Auffangelektrode | 33 bis 45 |
| Kaltluftverteilungssystem | 46, 47, 48, 49 |
| Balkon | 50 |
| Luftverdichter | 51, 52, 53, 54 |
| Ausblasdüse | 55, 56, 57, 58, 59, 60, 61, 62, 63, 64, 65, 66, 67, 68, 69, 70, 71, 72, 73, 74 |
| Wärmetauscherrohrsystem | 75 |
| Blech | 76, 77, 78, 79, 80 |
| Zwischenboden | 81 |
| Kühlturmachse | 82 |
| Sprühspitze | 83, 84, 85 |
| Auffangrinne | 86, 87, 88 |
| Rahmen | 89, 90 |
| Luftzufuhr-Regelklappen | 91, 92 |
| Zwangsbelüfteter Hybridkühlturm | 93 |
| Kühlwasserberieselungssystem | 94, 95 |
| Luftansaugöffnung | 96, 97 |
| Luftzufuhrregelklappe | 98, 99 |
| Wasserauffangbecken | 100 |
| Zwischenboden | 101 |
| Zentrale Öffnung | 102 |
| Entladungsstrecke | 103, 104, 105 |
| Ansaugöffnung | 106, 107 |
| Frischluftregelklappe | 108, 109 |
| Leitblech | 110, 111, 112, 113, 114, 115, 116 |
| Ventilator | 116 |
| Wärmetauscherheizfläche | 117, 118 |
| Luftansaugöffnung | 119, 120 |
| Frischluftregelklappe | 121, 122 |
| Auffangrinne | 123, 124, 125, 126, 127 |

**Patentansprüche**

1. Verdunstungskühlturm (1; 93) mit am unteren Turmumfang vorgesehenen Ansaugöffnungen (2, 3; 96, 97) für Umgebungsluft, mit einem von der angesaugten Luft durchströmten Kühlwasserberieselungssystem (4; 94, 95), von dem Kühlwasser in ein am Boden des Kühlturms angeordnetes Auffangbekken (5; 100) regnet, und mit Mitteln (46...49; 106...109) zur Zumischung kühler Umgebungsluft zum aufsteigenden Strom der warm-feuchten Abluft im oberen Bereich des Kühlturms (1; 93) sowie mit einem diesen Gemischstrom in Richtung auf das oberen offene Ende (6) des Kühlturms (1; 93) durchlassenden Ausströmquerschnitt (102) eines Turmbereiches, dadurch gekennzeichnet,

dass im oberen Turmbereich, dessen gesamten Ausströmquerschnitt erfassend, elektrostatische Entladungsstrecken (7...19; 103, 104, 105) mit Auffangelektroden (33...45, 76...80) für die Abscheidung der in der warm-feuchten Abluft enthaltenen feinen Tröpfchen angeordnet sind,

dass den Auffangelektroden (33...45; 76...80) der Entladungsstrecken Sammeleinrichtungen (86, 87, 88; 123...127) für das abgeschiedene Wasser zugeordnet sind und

dass die Mittel zur Zumischung kühler Umgebungsluft Kaltluftverteilungssysteme (46...49; 110...115) umfassen, welche der zuzumischenden Umgebungsluft eine aufwärts gerichtete Strömungskomponente verleihen.

2. Verdunstungskühlturm nach Anspruch 1, dadurch gekennzeichnet, dass die Entladungsstrecken (7...19) jeweils aus wabenförmigen, auf ihrer Ober- und Unterseite offenen Auffangelektroden (33...45; 76...80) und aus Gegenelektroden in Form von drahtförmigen Sprühelektroden (20...32) bestehen, von welch letzteren jeweils eine durch jede Wabe (33...45; 76...80) der zugehörigen Auffangelektrode hängt.

3. Verdunstungskühlturm nach Anspruch 1 oder 2, dadurch gekennzeichnet, dass unmittelbar unter den Entladungsstrecken (7...19) Kaltluftgebläse (51...54) im Bereich der Turmaussenwand angeordnet sind, welche die Kühlluft in die Kaltluftverteilungssysteme (46...49) einblasen.

4. Verdunstungskühlturm nach Anspruch 1 oder 2, dadurch gekennzeichnet, dass die Sammeleinrichtungen (86, 87, 88; 123...127) am unteren Rand der Entladungsstrecken (7...19; 103, 104, 105) angeordnet sind.

5. Verdunstungskühlturm nach Anspruch 1, dadurch gekennzeichnet, dass Wärmetauscher (75) für die Aufwärmung der die Entladungsstrecken verlassenden Abluft im Kühlturm (1) oberhalb der elektrostatischen Endladungsstrecken (7...19) angeordnet sind.

6. Verdunstungskühlturm nach Anspruch 1, dadurch gekennzeichnet, dass zu beiden Seiten der Entladungsstrecken (103, 104, 105) Wärmetauscher (117, 118) angeordnet sind, welche Umgebungsluft aufwärmen, die den Kühlturm oberhalb der Entladungsstrecken (103, 104, 105) verlässt.

7. Verdunstungskühlturm nach Anspruch 5, dadurch gekennzeichnet, dass die Wärmetauscher (75) durch dem Külturm zuströmendes Kühlwasser beheizt werden.

8. Verdunstungskühlturm nach Anspruch 6, dadurch gekennzeichnet, dass das Verhältnis der den Wärmetauschern (117, 118), dem Kühlwasserberieselungssystem (94, 95) sowie der dem Kaltluftverteilungssystem (110...115) zugeleiteten Umgebungsluft durch Luftzufuhrregelklappen (98, 99; 108, 109; 121, 122) veränderbar ist.

9. Verdunstungskühlturm nach Anspruch 1, dadurch gekennzeichnet, dass zur Gewinnung von Trinkwasser aus salzhaltigem Wasser, z.B. Meerwasser, die Sammeleinrichtungen (86, 87, 88; 123 ...127) für das abgeschiedene Wasser einer Trink- und/oder Speisewasserversorgungseinrichtung vorgeschaltet sind und das Kühlwasserberieselungssystem (4; 94, 95) mit dem salzhaltigen Wasser gespeist wird, welches zum Auffangbecken (5; 100) des Verdunstungskühlturms (1; 93) über auf der einen Seite vom Kühlwasser und auf der anderen Seite vom salzhaltigen, aufzuwärmenden Wasser durchströmte Wärmetauscher leitbar ist.

## Claims

1. Evaporation-type cooling tower (1; 93) with intakes (2, 3; 97, 97) for ambient air provided on the lower periphery of the tower, with a cooling water sprinkler system (4; 94, 95) through which the drawn-in air flows and from which cooling water pours into a collecting reservoir (5; 100) situated at the base of the cooling tower, and with means (46... 49; 106...109) for mixing cool ambient air with the upward flow of warm humid exhaust air in the upper region of the cooling tower (1; 93) and with an outlet cross section (102) of a tower region allowing this mixed flow through in the direction of the upper open end (6) of the cooling tower (1; 93) characterised in that

in the upper tower region, electrostatic discharge gaps (7...19; 103, 104, 105) covering the entire outlet cross section are arranged with collector electrodes (33...45; 76...80) for precipitating the fine droplets contained in the warm humid exhaust air,

collecting devices (86, 87, 88; 123...127) for the precipitated water are assigned to the collector electrodes (33...45; 76...80) of the discharge gaps and

the means for mixing cool ambient air incorporate cold air distributing systems (46...49; 110...115) which give the ambient air to be mixed an upwardly directed flow component.

2. Evaporation-type cooling tower according to claim 1, characterised in that the discharge gaps (7...19) respectively comprise honeycombed collector electrodes (33...45; 76...80) open on their upper and lower sides, and counter electrodes in the form of filamentary spray electrodes (20...32), one of which hangs through each honeycomb section (33... 45; 76...80) of the associated collector electrode.

3. Evaporation-type cooling tower according to claim 1 or 2, characterised in that directly below the discharge gaps (7...19) there are arranged cooling air blowers (51...54) in the region of the outer wall of the tower, which blow the cooling air into the cold air distribution system (46...49).

4. Evaporation-type cooling tower according to claim 1 or 2, characterised in that the collecting devices (86, 87, 88; 123...127) are arranged on the lower edge of the discharge gaps (7...19; 103, 104, 105).

5. Evaporation-type cooling tower according to claim 1, characterised in that heat exchangers (75) for heating the exhaust air leaving the discharge gaps are arranged in the cooling tower (1) above the electrostatic discharge gaps (7...19).

6. Evaporation-type cooling tower according to claim 1, characterised in that on both sides of the discharge gaps (103, 104, 105) heat exchangers (117, 118) are arranged which heat up ambient air leaving the cooling tower above the discharge gaps (103, 104, 105).

7. Evaporation-type cooling tower according to claim 5, characterised in that the heat exchangers (75) are heated by cooling water flowing to the cooling tower (1).

8. Evaporation-type cooling tower according to claim 6, characterised in that the relative amounts of ambient air conveyed to the heat exchangers (117, 118), the cooling water sprinkler system (94, 95) and the cold air distribution system (110...115) can be varied by means of air supply regulating valves (98, 99; 108, 109; 121, 122).

9. Evaporation-type cooling tower according to claim 1, characterised in that to obtain drinking water from salt water, e.g. sea water, the collecting devices (86, 87, 88; 123...127) for the separated water are connected to a drinking- and/or feed water supply system, and the cooling water sprinkler system (4; 94, 95) is supplied with the salt water which can be passed to the collecting reservoir (5; 100) of the evaporation-type cooling tower (1; 93) by means of heat exchangers through which cooling water flows on one side and salt water to be heated on the other side.

## Revendications

1. Tour de refroidissement par évaporation (1; 93) comprenant des ouvertures d'aspiration (2, 3; 97, 97) de l'air ambiant prévues sur le pourtour inférieur de la tour, un système de ruissellement d'eau de refroidissement (4; 94, 95), qui est parcouru par l'air aspiré et duquel de l'eau de refroidissement tombe en pluie dans un bassin de réception (5; 100) disposé au fond de la tour de refroidissement, et des moyens (46...49; 106...109) pour mélanger de l'air ambiant froid au courant ascendant de l'effluent gazeux humide et chaud à la partie supérieure de la tour de refroidissement (1; 93), ainsi qu'une section transversale de sortie (102) d'une partie de la tour faisant passer ce courant de mélange en direction de l'extrémité supérieure ouverte (6) de la tour de refroidissement, caractérisée en ce que,

dans la partie supérieure de la tour, en embrassant toute la section transversale de sortie, sont disposées des zones de décharge électrostatique (7...19; 103, 104, 105) ayant des électrodes collectrices (33 ...45; 76...80) pour la séparation des fines gouttelettes contenues dans l'air chaud et humide, aux électrodes collectrices (33...45; 76...80) des zones de décharge sont associés des dispositifs collecteurs (86, 87, 88; 123...127) pour l'eau séparée et

les moyens de mélange de l'air ambiant froid comprennent des systèmes de répartition de l'air froid (46...49; 110...115), qui donnent une composante d'écoulement dirigée vers le haut à l'air ambiant qui se mélange.

2. Tour de refroidissement selon la revendication 2, caractérisée en ce que les zones de décharge (7... 19) sont constituées d'électrodes collectrices (33... 45; 76...80) à nid d'abeille et ouvertes sur leurs côtés supérieur et inférieur et de contre-électrodes en forme d'électrodes d'émission (20...32) en fil métallique, chacune de ces dernières étant pendante en passant à travers chaque alvéole (33...45; 76... 80) de l'électrode collectrice correspondante.

3. Tour de refroidissement par évaporation suivant la revendication 1 ou 2, caractérisée en ce que, directement en dessous des zones de décharge (7... 19) sont disposées, dans la région de la paroi extérieure de la tour, des ventilateurs d'air de refroidissement (51...54) qui insufflent l'air de refroidissement dans les systèmes de répartition d'air froid (46 ...49).

4. Tour de refroidissement par évaporation suivant la revendication 1 ou 2, caractérisée en ce que les dispositifs collecteurs (86, 87, 88; 123...127) sont disposés au bord inférieur des zones de décharge (7...19; 103, 104, 105).

5. Tour de refroidissement par évaporation suivant la revendication 1, caractérisée en ce que des échangeurs de chaleur (75) destinés à réchauffer l'air qui quitte les zones de décharge sont disposés dans la tour de refroidissement (1) au-dessus des zones de décharge électrostatique (7...19).

6. Tour de refroidissement par évaporation suivant la revendication 1, caractérisée en ce que de part et d'autre des zones de décharge (103, 104, 105) sont disposés des échangeurs de chaleur (117, 118), qui réchauffent l'air ambiant qui quitte la tour de refroidissement au-dessus des zones de décharge (103, 104, 105).

7. Tour de refroidissement par évaporation suivant la revendication 5, caractérisée en ce que les échangeurs de chaleur (75) sont chauffés par l'eau de refroidissement qui afflue dans la tour de refroidissement (1).

8. Tour de refroidissement par évaporation suivant la revendication 6, caractérisée en ce que le rapport de l'air ambiant amené aux échangeurs de chaleur (117, 118), au système de ruissellement d'eau de refroidissement (94, 95), ainsi qu'au système de répartition de l'air froid (110...115) peut être modifié par des volets de réglage d'arrivée d'air (98, 99; 108, 109; 121, 122).

9. Tour de refroidissement par évaporation suivant la revendication 1, caractérisée en ce que, pour obtenir de l'eau potable à partir d'eau salée, par exemple à partir d'eau de mer, les dispositifs collecteurs (86, 87; 123...127) de l'eau séparée sont montés en amont d'un dispositif d'alimentation en eau potable et/ou en eau d'alimentation et le système de ruissellement d'eau de refroidissement (4; 94, 95) est alimenté en eau salée qui peut être amenée au bassin de réception (5; 100) de la tour de refroidissement par évaporation (1; 93) par un échangeur de chaleur parcouru d'un côté par l'eau de refroidissement et de l'autre côté par de l'eau salée à réchauffer.

FIG 1

FIG 2

FIG 4

FIG 3